(19) Europäisches Patentamt
European Patent Office
Office européen des brevets

(11) **EP 2 162 291 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(21) Anmeldenummer: **08784534.3**

(22) Anmeldetag: **24.06.2008**

(51) Int Cl.:
***B41J 3/54*** *(2006.01)* ***B41F 13/46*** *(2006.01)*
***B41J 2/505*** *(2006.01)*

(86) Internationale Anmeldenummer:
**PCT/EP2008/005063**

(87) Internationale Veröffentlichungsnummer:
**WO 2009/003607 (08.01.2009 Gazette 2009/02)**

(54) **VERFAHREN ZUM BEDRUCKEN EINES BEDRUCKSTOFFS**

METHOD FOR PRINTING A SUBSTRATE

PROCÉDÉ D'IMPRESSION D'UNE MATIÈRE À IMPRIMER

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.06.2007 DE 102007030374**

(43) Veröffentlichungstag der Anmeldung:
**17.03.2010 Patentblatt 2010/11**

(73) Patentinhaber: **manroland Goss web systems GmbH**
**86153 Augsburg (DE)**

(72) Erfinder: **SCHULMEISTER, Peter**
**85276 Pfaffenhofen (DE)**

(56) Entgegenhaltungen:
**WO-A-2006/027212 GB-A- 2 372 898**
**JP-A- 2006 076 021**

EP 2 162 291 B1

**Beschreibung**

Die Erfindung betrifft ein Verfahren zum Bedrucken eines Bedruckstoffs nach dem Oberbegriff des Anspruchs 1.

Das Dokument JP 2006 076021 A offenbart ein Verfahren zum Bedrucken von Papier, wobei das Papier mit einem druckformbasierten und mit einem druckformlosen Druckverfahren bedruckt wird. Die Druckauflösung des druckformlosen Druckverfahrens wird angepasst an die Druckauflösung des druckformbasierten Druckverfahrens.

In druckformbasierten, vorzugsweise nach dem Offset-Druckprinzip arbeitenden Druckmaschinen, wie z. B. in Rollenrotationsdruckmaschinen sowie Bogendruckmaschinen, finden zunehmend druckformlose Inkjet-Druckeinrichtungen Verwendung, die insbesondere der Individualisierung von über den Offsetdruck hergestellten Druckerzeugnissen mit z. B. Barcodes, Nummerierungen oder sonstigen Markierungen dienen. Derartige Inkjet-Druckeinrichtungen verfügen über mindestens einen Inkjet-Druckkopf, der nach dem sogenannten Continuous-Inkjet-Prinzip, dem Drop-on-demand-Inkjet-Prinzip, dem Thermal-Inkjet-Prinzip, dem Bubble-Inkjet-Prinzip oder jedem anderem Inkjet-Prinzip ausgebildet sein kann.

Da die maximale Druckgeschwindigkeit von Inkjet-Druckeinrichtungen deutlich geringer als die maximale Druckgeschwindigkeit von Offset-Druckeinrichtungen ist, bereitet ein Inline-Bedrucken eines Bedruckstoffs nach dem Offset-Druck und nach dem Inkjet-Druck Schwierigkeiten.

Um die erzielbare Druckgeschwindigkeit von Inkjet-Druckeinrichtungen zu erhöhen, ist es aus der Praxis bekannt, Inkjet-Druckeinrichtungen mit einer Vielzahl an Inkjet-Druckköpfen zu verwenden, nämlich einerseits mit mehreren Inkjet-Druckköpfen quer zur Transportrichtung des Bedruckstoffs bzw. quer zur Druckrichtung und anderseits mit mehreren Inkjet-Druckköpfen in Transportrichtung des Bedruckstoffs bzw. in Druckrichtung, wobei die Vielzahl von Inkjet-Druckköpfen arrayartig bzw. matrixartig nebeneinander angeordnet sind.

Obwohl hiermit die Druckgeschwindigkeit von Inkjet-Druckverfahren gesteigert werden kann, ist es bislang nicht möglich, in einer z. B. als Zeitungsdruckmaschine ausgebildeten Offset-Rollenrotationsdruckmaschine, die mit Druckgeschwindigkeiten für den druckformbasierten Offsetdruck von bis zu 15 m/s arbeitet, einen Bedruckstoff inline mit einem druckformlosen Inkjet-Druckverfahren zu bedrucken, da für Inkjet-Druckverfahren bislang Druckgeschwindigkeiten von maximal 5 m/s realisiert werden können. Dies hat zur Folge, dass dann, wenn ein Bedruckstoff mit einem druckformbasierten Druckverfahren und inline hierzu mit einem druckformlosen Inkjet-Druckverfahren bedruckt werden soll, das mit Hilfe des Inkjet-Druckverfahrens aufgetragene Druckbild einer Verzerrung unterliegt. Es besteht daher ein Bedarf an einem Verfahren zum Bedrucken eines Bedruckstoffs, mit Hilfe dessen der Bedruckstoff bei hohen Druckgeschwindigkeiten von mehr als 5 m/s inline bzw. gleichzeitig mit einem druckformbasierten Druckverfahren und einem druckformlosen Inkjet-Druckverfahren bedruckt werden kann, und zwar ohne die Gefahr dass ein mit Hilfe des Inkjet-Druckverfahrens aufzutragendes Druckbild einer Verzerrung unterliegt. Ein ähnliches Problem stellt sich dann, wenn als druckformloses Druckverfahren zum Beispiel Laserdrucken verwendet wird.

Hiervon ausgehend liegt der vorliegenden Erfindung das Problem zugrunde, ein neuartiges Verfahren zum Bedrucken eines Bedruckstoffs schaffen. Dieses Problem wird durch ein Verfahren gemäß Anspruch 1 gelöst. Erfindungsgemäß wird abhängig von einer Druckgeschwindigkeit des druckformbasierten Druckverfahrens eine Druckauflösung des druckformlosen Druckverfahrens bestimmt. Im Sinne der hier vorliegenden Erfindung wird die Druckauflösung des druckformlosen Druckverfahrens, insbesondere des Inkjet-Druckverfahrens, abhängig von der Druckgeschwindigkeit des druckformbasierten Druckverfahrens, insbesondere des Offset-Druckverfahrens, bestimmt. Es ist grundsätzlich denkbar, die Druckauflösung des druckformlosen Druckverfahrens in der Weise festzulegen, dass, je höher die Druckgeschwindigkeit des druckformbasierten Druckverfahrens gegenüber der maximalen Druckgeschwindigkeit des druckformlosen Druckverfahrens, bei der mit maximaler Druckauflösung gedruckt werden kann, ist, die Druckauflösung des druckformlosen Druckverfahrens desto geringer wird.

Hierdurch ist es möglich ohne die Gefahr von Verzerrungen des mit Hilfe des druckformlosen Druckverfahrens aufzutragenden Druckbilds das druckformlose Druckverfahren bei einer höheren Druckgeschwindigkeit zu betreiben als die maximale Druckgeschwindigkeit, für die dasselbe spezifiziert ist.

Vorzugsweise ist eine Druckauflösung des druckformlosen Druckverfahrens quer zur Transportrichtung des Bedruckstoffs gesehen unabhängig von der Druckgeschwindigkeit des druckformbasierten Druckverfahrens; eine Druckauflösung des druckformlosen Druckverfahrens in Transportrichtung des Bedruckstoffs gesehen wird jedoch abhängig von der Druckgeschwindigkeit des druckformbasierten Druckverfahrens bestimmt.

Bevorzugte Weiterbildungen der Erfindung ergeben sich aus den Unteransprüchen und der nachfolgenden Beschreibung. Ausführungsbeispiele der Erfindung werden an Hand der Zeichnung näher erläutert. Dabei zeigt:

Fig. 1: eine erste schematisierte Darstellung zur Verdeutlichung des erfindungsgemäßen Verfahrens zum Bedrucken eines Bedruckstoffs; und

Fig. 2: eine zweite schematisierte Darstellung zur Verdeutlichung des erfindungsgemäßen Verfahrens zum Bedrucken eines Bedruckstoffs.

Die hier vorliegende Erfindung betrifft ein Verfahren zum Bedrucken eines Bedruckstoffs, wobei der Bedruckstoff mit einem druckformbasierten Druckverfahren sowie inline zum druckformbasierten Druckverfahren mit einem druckformlosen Inkjet-Druckverfahren bedruckt wird. Beim druckformbasierten Druckverfahren handelt es sich vorzugsweise um ein Offset-Druckverfahren. Das erfindungsgemäße Verfahren findet vorzugsweise in Offset-Rollenrotationsdruckmaschinen wie z. B. in Zeitungsdruckmaschinen Verwendung, um so innerhalb der Offset-Rollenrotationsdruckmaschine inline zum Offsetdruck einen bahnförmigen Bedruckstoff über das Inkjet-Druckverfahren zu bedrucken.

Im Sinne der Erfindung wird zum inline Bedrucken eines Bedruckstoffs mit einem druckformbasierten Druckverfahren sowie gleichzeitig mit einem druckformlosen Inkjet-Druckverfahren so vorgegangen, dass abhängig von einer Druckgeschwindigkeit des druckformbasierten Druckverfahrens, insbesondere des Offset-Druckverfahrens, eine Druckauflösung des Inkjet-Druckverfahrens bestimmt wird. Dabei wird die Druckauflösung vorzugsweise derart bestimmt, dass eine Druckauflösung des Inkjet-Druckverfahrens quer zur Transportrichtung des Bedruckstoffs unabhängig von der Druckgeschwindigkeit des druckformbasierten Druckverfahrens ist, dass jedoch eine Druckauflösung des Inkjet-Druckverfahrens in Transportrichtung des Bedruckstoffs abhängig von der Druckgeschwindigkeit des druckformbasierten Druckverfahrens ist.

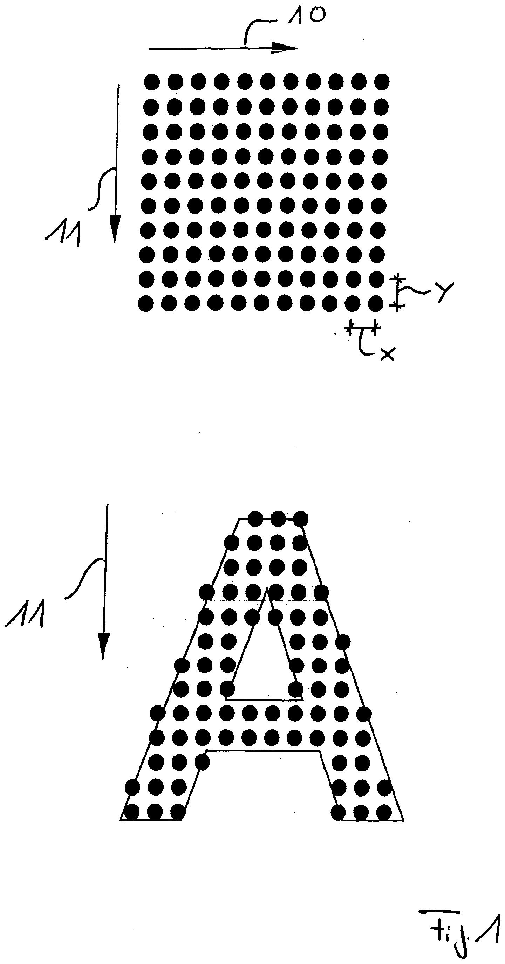

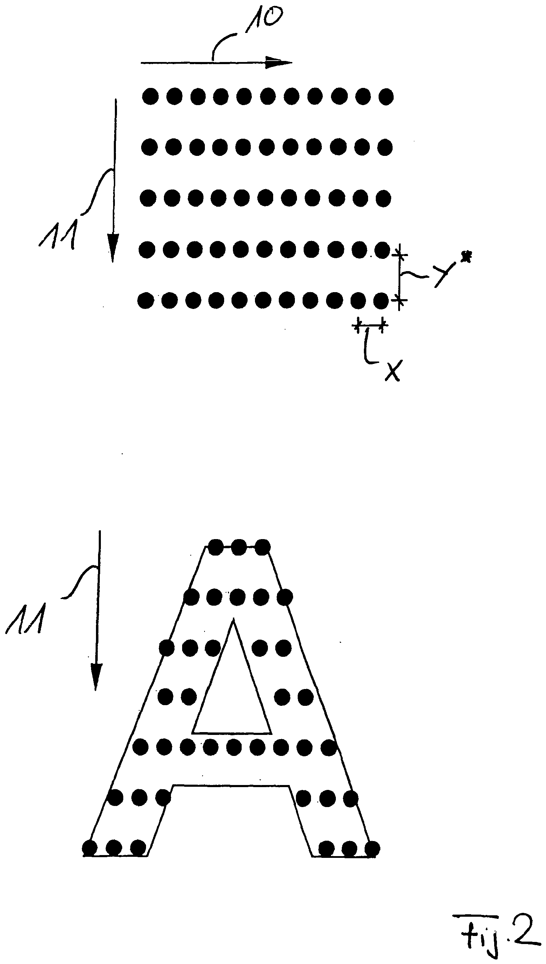

Dies wird nachfolgend unter Bezugnahme auf Fig. 1 und 2 im Detail beschrieben. Fig. 1 visualisiert schematisiert eine mit Hilfe eines konventionellen Inkjet-Druckverfahrens erzielbare Auflösung, wobei die Auflösung quer zur Transportrichtung des Bedruckstoffs (Pfeil 10) gesehen sowie in Transportrichtung des Bedruckstoffs (Pfeil 11) gesehen gleich ist. Demnach entspricht quer zur Transportrichtung des Bedruckstoffs gesehen der Abstand x von mit Hilfe des Inkjet-Druckverfahrens druckbaren Punkten dem Abstand y zwischen denselben in Transportrichtung des Bedruckstoffs gesehen.

Typischerweise beträgt die Auflösung eines Inkjet-Druckverfahrens 240x240 dpi oder 300x300 dpi. Mit einer solchen Druckauflösung, die quer zur Transportrichtung des Bedruckstoffs und in Transportrichtung des Bedruckstoffs gesehen gleich ist, kann z. B. gemäß Fig. 1 auf die dargestellte Art und Weise der Buchstabe A gedruckt werden.

Dann, wenn die Druckgeschwindigkeit des druckformbasierten Druckverfahrens, insbesondere des Offset-Druckverfahrens, kleiner ist als oder gleich groß ist wie eine maximale Druckgeschwindigkeit des Inkjet-Druckverfahrens, bei der mit der maximalen Inkjet-Druckauflösung gedruckt werden kann, entspricht die Druckauflösung des Inkjet-Druckverfahrens in Transportrichtung des Bedruckstoffs sowie quer zur Transportrichtung des Bedruckstoffs der maximalen Druckauflösung des Inkjet-Druckverfahrens.

Dann hingegen, wenn die Druckgeschwindigkeit des druckformbasierten Druckverfahrens, insbesondere des Offset-Druckverfahrens, größer als die maximale Druckgeschwindigkeit des druckformlosen Inkjet-Druckverfahrens, bei der mit maximaler Inkjet-Druckauflösung gedruckt werden kann, ist, wird die Druckauflösung des Inkjet-Druckverfahrens in Transportrichtung des Bedruckstoffs gesehen kleiner als die maximale Druckauflösung des Inkjet-Druckverfahrens gewählt.

Dann, wenn die Druckgeschwindigkeit des druckformbasierten Druckverfahrens, größer als die maximale Druckgeschwindigkeit des druckformlosen Inkjet-Druckverfahrens ist, wird die Druckauflösung des Inkjet-Druckverfahrens in Transportrichtung des Bedruckstoffs nach folgender Formel bestimmt:

$$DA_{Inkjet} = DA_{Inkjet}^{max} * \frac{v_{Inkjet}^{max}}{v_{Offset}}$$

wobei $DA_{Inkjet}$ die Druckauflösung des Inkjet-Druckverfahrens in Transportrichtung des Bedruckstoffs ist, wobei $DA_{Inkjet}^{max}$ die maximale Druckauflösung des Inkjet-Druckverfahrens ist, wobei $v_{Inkjet}^{max}$ die maximale Druckgeschwindigkeit des Inkjet-Druckverfahrens ist, bei der mit maximaler Druckauflösung $DA_{Inkjet}^{max}$ gedruckt werden kann, und wobei $v_{Offset}$ die Druckgeschwindigkeit des druckformbasierten Druckverfahrens ist.

Aus der obigen Formel folgt demnach, dass die Druckauflösung des Inkjet-Druckverfahrens in Transportrichtung des Bedruckstoffs von der Transportgeschwindigkeit des druckformbasierten Druckverfahrens, insbesondere des Offset-Druckverfahrens, abhängig ist, und zwar derart, dass die Druckauflösung des Inkjet-Druckverfahrens reziprok bzw. umgekehrt proportional zur Druckgeschwindigkeit des druckformbasierten Druckverfahrens ist.

In einem konkreten Ausführungsbeispiel soll davon ausgegangen werden, dass die maximale Druckauflösung des Inkjet-Druckverfahrens bei einer maximalen Druckgeschwindigkeit des Inkjet-Druckverfahrens von 5 m/s 300x300 dpi beträgt. Soll nun mit einem solchen Inkjet-Druckverfahren ein Bedruckstoff inline zu einem druckformbasierten Offsetdruckverfahren, welches mit einer Druckgeschwindigkeit von 15 m/s arbeitet, betrieben werden, so beträgt die Druckauflösung des Inkjet-Druckverfahrens quer zur Transportrichtung des Bedruckstoffs 300 dpi und in Transportrichtung des Bedruckstoffs 100 dpi, sodass die Gesamtauflösung demnach bei 300x100 dpi liegt.

Fig. 2 verdeutlicht eine verringerte Druckauflösung für das Inkjet-Druckverfahren, wobei quer zur Transportrichtung (Pfeil 10) des Bedruckstoffs gesehen der Abstand x zwischen Druckpunkten unverändert bleibt, wobei sich jedoch in Transportrichtung (Pfeil 11) des Bedruckstoffs gesehen der Abstand y* zwischen den Druckpunkten vergrößert. Der Buchstabe A wird demnach in Transportrichtung des Bedruckstoffs gesehen mit einer geringeren Anzahl von Punkten gedruckt.

Nach einer ersten Variante der Erfindung wird die Druckauflösung des Inkjet-Druckverfahrens abhängig von der maximalen Druckgeschwindigkeit des druckformbasierten Druckverfahrens, insbesondere des Offset-Druckverfahrens, einmal bestimmt, sodass die Druckauflösung des Inkjet-Druckverfahrens konstant und demnach unabhängig von der tatsächlichen Druckgeschwindigkeit des druckformbasierten Offset-Druckverfahrens ist.

Hierdurch kann ein gleichmäßiges Erscheinungsbild des mit Hilfe des Inkjet-Druckverfahrens zu druckenden Druckbilds über den gesamten Geschwindigkeitsbereich des druckformbasierten Offset-Druckverfahrens realisiert werden.

Mit dem erfindungsgemäßen Druckverfahren ist es möglich, auch bei Druckgeschwindigkeiten, die oberhalb einer zulässigen Druckgeschwindigkeit für Inkjet-Druckverfahren liegen, einen Bedruckstoff mit einer hohen Druckqualität im Offset-Druck sowie inline im Inkjet-Druck zu bedrucken.

Die Erfindung ist auch dann einsetzbar, wenn ein anderes druckformloses Druckverfahren, zum Beispiel Laserdrucken, inline zum druckformbasierten Druckverfahrens verwendet wird.


## Patentansprüche

1. Verfahren zum Bedrucken eines Bedruckstoffs, wobei der Bedruckstoff mit einem druckformbasierten Druckverfahren, insbesondere mit einem Offset-Druckverfahren, sowie inline zum druckformbasierten Druckverfahren mit einem druckformlosen Druckverfahren, insbesondere mit einem Inkjet-Druckverfahren, bedruckt wird, wobei abhängig von einer Druckgeschwindigkeit des druckformbasierten Druckverfahrens eine Druckauflösung des druckformlosen Druckverfahrens bestimmt wird, **dadurch gekennzeichnet, dass** die Druckauflösung des druckformlosen Druckverfahrens in Transportrichtung des Bedruckstoffs derart bestimmt wird, dass dann, wenn die Druckgeschwindigkeit des druckformbasierten Druckverfahrens kleiner oder gleich groß ist als eine maximale Druckgeschwindigkeit des druckformlosen Druckverfahrens, bei der mit maximaler Druckauflösung gedruckt werden kann, die Druckauflösung des druckformlosen Druckverfahrens in Transportrichtung des Bedruckstoffs der maximalen Druckauflösung des druckformlosen Druckverfahrens entspricht.

2. Verfahren nach Anspruch 1, **dadurch gekenn-**

**zeichnet, dass** eine Druckauflösung des druckformlosen Druckverfahrens quer zur Transportrichtung des Bedruckstoffs unabhängig von der Druckgeschwindigkeit des druckformbasierten Druckverfahrens ist.

3. Verfahren nach Anspruch 1, **dadurch gekennzeichnet, dass** die Druckauflösung des druckformlosen Druckverfahrens in Transportrichtung des Bedruckstoffs derart bestimmt wird, dass dann, wenn die Druckgeschwindigkeit des druckformbasierten Druckverfahrens größer ist als eine maximale Druckgeschwindigkeit des druckformlosen Druckverfahrens, bei der mit maximaler Druckauflösung gedruckt werden kann, die Druckauflösung des druckformlosen Druckverfahrens in Transportrichtung des Bedruckstoffs kleiner ist als die maximale Druckauflösung des druckformlosen Druckverfahrens.

4. Verfahren nach Anspruch 3, **dadurch gekennzeichnet, dass** dann, wenn die Druckgeschwindigkeit des druckformbasierten Druckverfahrens größer ist als eine maximale Druckgeschwindigkeit des druckformlosen Druckverfahrens, bei der mit maximaler Druckauflösung gedruckt werden kann, die Druckauflösung des druckformlosen Druckverfahrens in Transportrichtung des Bedruckstoffs wie folgt bestimmt wird:

$$DA_{Inkjet} = DA_{Inkjet}^{\max} * \frac{v_{Inkjet}^{\max}}{v_{Offset}}$$

wobei $DA_{Inkjet}$ die Druckauflösung des druckformlosen Druckverfahrens in Transportrichtung des Bedruckstoffs ist, wobei $DA_{Inkjet}^{\max}$ die maximale Druckauflösung des druckformlosen Druckverfahrens ist, wobei $v_{Inkjet}^{\max}$ die maximale Druckgeschwindigkeit des druckformlosen Druckverfahrens ist, bei der mit maximaler Druckauflösung $DA_{Inkjet}^{\max}$ gedruckt werden kann, und wobei $v_{Offset}$ die Druckgeschwindigkeit des druckformbasierten Druckverfahrens ist.

5. Verfahren nach Anspruch 4, **dadurch gekennzeichnet, dass** die Druckauflösung des druckformlosen Druckverfahrens abhängig von einer maximalen Druckgeschwindigkeit des druckformbasierten Druckverfahrens bestimmt wird, sodass die Druckauflösung des druckformlosen Druckverfahrens konstant und unabhängig von einer tatsächlichen Druckgeschwindigkeit des druckformbasierten Druckverfahrens ist.

**Claims**

1. A method for printing a printing material, wherein the printing material is printed by means of a printing forme-based printing method, in particular by means of an offset printing method, as well as in-line to the printing forme-based printing method by means of a printing forme-free printing method, in particular by means of an inkjet printing method, wherein a printing resolution of the printing forme-free printing method is determined as a function of a printing speed of the printing forme-based printing method, **characterized in that** the printing resolution of the printing forme-free printing method in the transport direction of the printing material is determined in such a way that the printing resolution of the printing forme-free printing method in the transport direction of the printing material corresponds to the maximum printing resolution of the printing forme-free printing method when the printing speed of the printing forme-based printing method is lower than or equal to a maximum printing speed of the printing forme-free printing method, at which printing can occur with maximum printing resolution.

2. The method according to claim 1, **characterized in that** a printing resolution of the printing forme-free printing method transversely to the transport direction of the printing material is independent of the printing speed of the printing forme-based printing method.

3. The method according to claim 1, **characterized in that** the printing resolution of the printing forme-free printing method in the transport direction of the printing material is determined in such a way that that the printing resolution of the printing forme-free printing method in the transport direction of the printing material is lower than the maximum printing resolution of the printing forme-free printing method when the printing speed of the printing forme-based printing method is greater than a maximum printing speed of the printing forme-free printing method, at which printing can occur with maximum printing resolution.

4. The method according to claim 3, **characterized in that** the printing resolution of the printing forme-free printing method in the transport direction of the printing material is determined as follows when the printing speed of the printing forme-based printing method is greater than a maximum printing speed of the printing forme-free printing method, at which printing can occur with maximum printing resolution:

$$DA_{Inkjet} = DA_{Inkjet}^{\max} * \frac{v_{Inkjet}^{\max}}{v_{Offset}}$$

wherein $DA_{inkjet}$ is the printing resolution of the printing forme-free printing method in the transport direction of the printing material, wherein $DA_{Inkjet}^{\max}$ is the maximum printing resolution of the printing forme-free printing method, wherein $v_{Inkjet}^{\max}$ is the maximum printing speed of the printing forme-free printing method, at which printing can occur with maximum printing resolution $DA_{Inkjet}^{\max}$ and , wherein $v_{offset}$ is the printing speed of the printing forme-based printing method.

5. The method according to claim 4, **characterized in that** the printing resolution of the printing forme-free printing method is determined as a function of a maximum printing speed of the printing forme-based printing method, so that the printing resolution of the printing forme-free printing method is constant and independent of an actual printing speed of the printing forme-based printing method.

**Revendications**

1. Procédé d'impression d'un support d'impression, le support d'impression étant imprimé par un procédé d'impression basé sur cliché d'impression, en particulier par un procédé d'impression offset et un procédé d'impression basé sur cliché d'impression en ligne par un procédé d'impression sans cliché d'impression, en particulier par un procédé d'impression à jet d'encre, une définition d'impression du procédé d'impression sans cliché d'impression étant définie en fonction d'une vitesse d'impression du procédé d'impression basé sur cliché d'impression, **caractérisé en ce que** la définition d'impression du procédé d'impression sans cliché d'impression est définie dans le sens de transport du support d'impression de manière à ce que, lorsque la vitesse d'impression du procédé d'impression basé sur cliché d'impression est inférieure ou égale à une vitesse d'impression maximale du procédé d'impression sans cliché d'impression à laquelle on peut imprimer avec une définition d'impression maximale, la définition d'impression du procédé d'impression sans cliché d'impression correspond, dans le sens de transport du support d'impression, à la définition d'impression maximale du procédé d'impression sans cliché d'impression.

2. Procédé selon la revendication 1, **caractérisé en ce qu'**une définition d'impression du procédé d'impression sans cliché d'impression transversalement au sens de transport du support d'impression est indépendante de la vitesse d'impression du procédé d'impression basé sur cliché d'impression.

3. Procédé selon la revendication 1, **caractérisé en ce que** la définition d'impression du procédé d'impression sans cliché d'impression dans le sens de transport du support d'impression est définie de manière à ce que, lorsque la vitesse d'impression du procédé d'impression basé sur cliché d'impression est supérieure à une vitesse d'impression maximale du procédé d'impression sans cliché d'impression à laquelle on peut imprimer avec la définition d'impression maximale, la définition d'impression du procédé d'impression sans cliché d'impression dans le sens de transport du support d'impression est inférieure à la vitesse d'impression maximale du procédé d'impression sans cliché d'impression.

4. Procédé selon la revendication 3, **caractérisé en ce que**, lorsque la vitesse d'impression du procédé d'impression basé sur cliché d'impression est supérieure à une vitesse d'impression maximale du procédé d'impression sans cliché d'impression à laquelle on peut imprimer avec la définition d'impression maximale, la définition d'impression du procédé d'impression sans cliché d'impression dans le sens de transport du support d'impression est définie comme suit :

$$DA_{Inkjet} = DA_{Inkjet}^{max} * \frac{v_{Inkjet}^{max}}{v_{Offset}}$$

sachant que $DA_{inkjet}$ est la définition d'impression du procédé d'impression sans cliché d'impression dans le sens de transport du support d'impression, que $DA_{Inkjet}^{max}$ est la définition d'impression maximale du procédé d'impression sans cliché d'impression, que $v_{Inkjet}^{max}$ est la vitesse d'impression maximale du procédé d'impression sans cliché d'impression à laquelle on peut imprimer avec la définition d'impression maximale $DA_{Inkjet}^{max}$, et que $v_{offset}$ est la vitesse d'impression du procédé d'impression basé sur cliché d'impression.

5. Procédé selon la revendication 4, **caractérisé en ce que** la définition d'impression du procédé d'impression sans cliché d'impression est définie en fonction d'une vitesse d'impression maximale du procédé d'impression basé sur cliché d'impression, de sorte que la définition d'impression du procédé d'impression sans cliché d'impression est constante et indépendante d'une vitesse d'impression réelle du procédé d'impression basé sur cliché d'impression.

Fig 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2006076021 A